# EUROPÄISCHE PATENTSCHRIFT

(11) **EP 1 285 715 B1**
(45) Veröffentlichungstag und Bekanntmachung des Hinweises auf die Patenterteilung: **08.04.2009**
(21) Anmeldenummer: 02015209.6
(22) Anmeldetag: 09.07.2002
(51) Int. Cl.: B23D 55/08, B23D 53/06, B23D 53/04, B23D 55/04

(54) **Bandsäge**
Bandsaw
Scie à ruban

(30) Priorität: 23.08.2001 DE 10141404
(43) Veröffentlichungstag der Anmeldung: 26.02.2003
(73) Patentinhaber: KEURO Besitz GmbH & Co. EDV-Dienstleistungs KG, D-77855 Achern-Gamshurst (DE)
(72) Erfinder: Heydt, Fritz, Dr.-Ing., 72622 Nürtingen (DE); Ihle, Manfred, 77830 Bühlertal (DE)
(74) Vertreter: Lemcke, Brommer & Partner

(56) Entgegenhaltungen:
- DE-A- 3 502 880
- FR-A- 2 527 972
- FR-A- 2 619 328
- US-A- 2 162 848
- US-A- 4 766 790
- US-A- 4 899 720
- PATENT ABSTRACTS OF JAPAN vol. 009, no. 135 (M-386), 11. Juni 1985 (1985-06-11) -& JP 60 016318 A (TOSHIO HARA;OTHERS: 01), 28. Januar 1985 (1985-01-28)
- PATENT ABSTRACTS OF JAPAN vol. 013, no. 282 (M-843), 28. Juni 1989 (1989-06-28) -& JP 01 078718 A (DAIDO KIKAI SEISAKUSHO:KK), 24. März 1989 (1989-03-24)
- PATENT ABSTRACTS OF JAPAN vol. 011, no. 082 (M-571), 12. März 1987 (1987-03-12) -& JP 61 236420 A (TSUNE SEIKI KK), 21. Oktober 1986 (1986-10-21)

## Beschreibung

Die Erfindung betrifft eine Bandsäge insbesondere für Werkstücke aus Stein und ähnlich schwer zerspanbare Materialien mit einem Werkstücktisch, auf dem zumindest ein Werkstück festlegbar ist und einem Werkzeugträger für ein umlaufendes Sägeband, mit den Merkmalen des Oberbegriffs von Anspruch 1.

Bandsägen können zum Sägen unterschiedlicher Materialen eingesetzt werden. Bei einem Großteil der zu sägenden Materialien werden Bandsägen eingesetzt, bei denen sich ein umlaufendes Sägeband mit einer Vorschubbewegung in ein Werkstück eindringt. Es entsteht dabei ein gerader Schnittverlauf in dem Werkstück.

Beim Sägen von Werkstücken aus Stein und ähnlich schwer zerspanbaren Materialien haben sich diese herkömmlichen Bandsägen als ungeeignet erwiesen, da die Eingriffslänge des Sägebandes in dem Werkstück und die daraus resultierenden Kräfte zu groß sind.

Um die Eingriffslänge des Sägebandes zu reduzieren, muss die rein translatorische Bewegung vom Sägeband zum Werkstück mit einer Schwenkbewegung kombiniert werden. Dabei entsteht ein gekrümmter, insbesondere bogenförmiger Schnittverlauf in dem Werkstück, wie es beispielsweise bei einer aus der DE 35 02 880 bekannten Bandsäge der Fall ist.

In der DE 31 02 766 wird eine Metallsägemaschine zum Durchschneiden eines Werkstücks unter Erzeugung einer Schaukelbewegung des Sägeblattes beschrieben. Es handelt sich dabei um eine Horizontalbandsäge, mit der ein bogenförmiger Schnittverlauf bei einer konstanten Eingriffslänge in dem Werkstück erzeugt werden kann. Der bogenförmige Schnittverlauf ist dabei in seinen geometrischen Abmessungen starr vorgegeben. Die starre Vorgabe geschieht mittels zweier geometrischer Formteile, sogenannter Nocken. Diese Nocken müssen in aufwendiger Weise für den gewünschten Schnittverlauf im Werkstück angefertigt werden. Es ist daher nicht möglich, die geometrischen Parameter des bogenförmigen Schnittverlaufs zu variieren, ohne einen erheblichen Aufwand bei der Herstellung spezieller geometrischer Formteile betreiben zu müssen. Mit der starren Vorgabe des Schnittverlaufs ist automatisch auch die Eingriffslänge im Werkstück festgelegt. Es ist somit nicht möglich, die Eingriffslänge des Sägebandes den geometrischen Abmessungen des Werkstücks, der Materialhärte des Werkstücks bzw. der Materialqualität des Werkstücks anzupassen, geschweige denn zu optimieren.

Der Erfindung liegt die Aufgabe zugrunde, eine Bandsäge zur Verfügung zu stellen mit der es möglich ist, schwer zerspanbare Materialien, insbesondere Werkstücke aus Stein zu sägen. Diese Bandsäge soll für Werkstücke unterschiedlicher geometrischer Abmessungen und unterschiedlichen Stoffeigenschaften des Materials, insbesondere der Materialhärte einsetzbar sein. Die erfindungsgemäße Bandsäge soll sich dabei durch eine hohe Schnittleistung, eine einfache Handhabung und durch kostengünstige Produktion auszeichnen. Sie soll weiterhin schnell und flexibel einsetzbar sein, ohne dass große Umbauten an ihr vorgenommen werden müssen.

Diese Aufgabe wird erfindungsgemäß gelöst, durch die Merkmale von Anspruch 1.

Die Bandsäge kann dabei in unterschiedlichen Bauformen ausgeführt sein. In der Regel ist das Werkstück feststehend und die Säge führt die translatorischen Bewegungen und die Schwenkbewegungen um eine senkrechte Achse zur Schnittebene aus. Dies ist häufig dann vorteilhaft, wenn es sich um ein besonders schweres und großes Werkstück handelt.

Andererseits ist es prinzipiell auch denkbar, dass der Werkzeugträger mit dem Sägeband fest steht und die translatorischen Bewegungen und die Schwenkbewegungen von dem Werkstücktisch mit dem Werkstück ausgeführt werden. Dies könnte sich dann als vorteilhaft erweisen, wenn der Werkzeugträger und das Sägeband besonders schwer und bewegungsunhandlich sind.

Eine dritte Möglichkeit der relativen Bewegungsführung von Sägeband und Werkstück zueinander besteht darin, dass eine Aufteilung von translatorischer Bewegung und Schwenkbewegung erfolgt. Es wäre beispielsweise denkbar, dass in diesem Fall das Werkstück die Schwenkbewegung ausführt und das Sägeband den translatorischen Bewegungsablauf vornimmt bzw. umgekehrt.

Bei der erfindungsgemäßen Bandsäge können Sägeband und Werkstück unterschiedlich zueinander angeordnet sein. So kann die Vorrichtung beispielsweise als Horizontalbandsäge oder als Vertikalbandsäge ausgeführt sein.

Bei der erfindungsgemäßen Bandsäge sind die translatorischen Bewegungen und die Schwenkbewegungen zwischen Werkstück und Sägeband aufeinander abgestimmt. Eine besonders günstige Ausgestaltung der Bandsäge besteht darin, diese Abstimmung der Bewegungsabläufe zueinander durch eine elektronische Steuerung vorzunehmen. Dazu können beispielsweise die gewünschten Bewegungsabläufe von einem PC errechnet werden, von dem dann die Steuersignale an entsprechende Stellmotoren zur Ausführung der Bewegungsabläufe ausgegeben werden. Auf diese Weise ist eine beliebige Abstimmung der Bewegungsabläufe aufeinander möglich.

Die translatorischen Bewegungen setzen sich aus Bewegungsabläufen des Sägebandes relativ zum Werkstück hin und vom Werkstück weg zusammen. Während des Sägevorganges findet also abwechselnd ein sich Annähern und ein sich Entfernen im translatorischen Bewegungsablauf des Sägebandes mit dem Werkstück statt. Diese Bewegungsabläufe werden auf die Schwenkbewegung exakt abgestimmt.

Den translatorischen Vor- und Zurückbewegungen des Sägebandes relativ zum Werkstück kann während des Sägevorganges eine Vorschubbewegung in Richtung auf das Werkstück überlagert sein. Diese Vorschubbewegungen können in unterschiedlicher Art und Weise realisiert werden. Zum einen ist es denkbar, dass während des gesamten Sägevorganges den translatorischen und den Schwenkbewegungsabläufen eine kontinuierliche Vorschubbewegung überlagert ist. Weiterhin ist es auch denkbar, dass während des Sägevorgangs die Vorschubbewegung, also die Annäherung zwischen Werkstück und Sägeband diskontinuierlich erfolgt. In diesem Fall erfolgt die Annäherung von Werkstück und Sägeband schubweise. D.h. Werkstück und Sägeband nähern sich zunächst in einer Vorschubbewegung einander an, dann erfolgt der kombinatorische Sägevorgang aus translatorischen und Schwenkbewegungen, anschließend findet in einem nächsten Schub eine weitere Annäherung zwischen Sägeband und Werkstück statt.

Je nachdem, ob eine kontinuierliche Vorschubbewegung oder eine diskontinuierliche Vorschubbewegung mit den translatorischen und den Schwenkbewegungen kombiniert wird, ändert sich das Bild des Schnittverlaufs.

Der Schnittverlauf, der während des Vorgangs in dem Werkstück entsteht, also der werkstoffseitige Rand der Schnittebene weist bei der erfindungsgemäßen Bandsäge einen gekrümmten Verlauf auf. Je nachdem wie die Bewegungsabläufe, also translatorische Bewegung, Schwenkbewegung und Vorschubbewegung miteinander kombiniert werden, zeichnet sich ein entsprechender Schnittverlauf im Werkstück ab. Der gekrümmte Schnittverlauf kann beispielsweise bogenförmig sein. In Einzelfällen erweist sich gegebenenfalls sogar ein kreisbogenförmiger Schnittverlauf beim Sägevorgang als besonders günstig. Zur Erzeugung eines kreisbogenförmigen Schnittverlaufs erweist es sich als vorteilhaft, wenn die Schwenkachse etwa in halber Höhe (bei einer Vertikalbandsäge) bzw. in halber Breite (bei einer Horizontalbandsäge) des Werkstücks, also etwa im Bereich der Symmetrielinie liegt.

Durch die Kombination von translatorischen und Schwenkbewegungen kann für den Sägevorgang die Eingriffslänge des Sägebandes, also die Kontaktstelle des Sägebandes mit dem Werkstück angepasst werden. In der Regel bleibt die Eingriffslänge des Sägebandes im Werkstück während des Sägevorganges nahezu konstant. Für besondere Anforderungen ist es möglich, die Eingriffslänge während des Schneidvorganges zu variieren. Dies kann dann von Vorteil sein, wenn der zu sägende Werkstoff in sich inhomogen ist, also Bereiche unterschiedlicher Stoffeigenschaften wie beispielsweise unterschiedlicher Materialhärte aufweist.

Im Grenzfall kann die Eingriffslänge des Sägebandes im Werkstück nur noch punktförmig sein.

Die Kriterien, nach denen sich die Abstimmung der Bewegungsabläufe aufeinander zur Erzeugung eines gewünschten gekrümmten Schnittverlaufs und zu einer Wahl der optimalen Eingriffslänge des Sägebandes im Werkstück richtet, sind vielfältig. Zum einen sind dabei die geometrischen Abmessungen des Werkstücks d.h. sowohl Höhe, Breite und Tiefe als auch die äußere Kontur des Werkstücks zu berücksichtigen. Weiterhin kommt es ganz entscheidend auf die Stoffeigenschaften des zu sägenden Materials an. Dabei spielt vor allem die Materialhärte eine entscheidende Rolle.

Weitere Merkmale und Vorteile der vorliegenden Erfindung ergeben sich aus der Beschreibung eines Ausführungsbeispieles anhand der Zeichnungen und aus der Zeichnung selbst; dabei zeigt:
- Figur 1: eine schematische Seitenansicht der erfindungsgemäßen Bandsäge;
- Figur 2: in schematischer Weise das Konzept der elektronischen Steuerung der Bandsäge;
- Figur 3: die Positionen des Sägebandes in 1°-Schnitten von - 5° bis + 5°;
- Figur 4: in einem Diagramm die Eindringtiefe des Werkzeuges in den zu sägenden Werkstoff in Abhängigkeit der Winkelposition, gemessen an der Werkstückauflage;
- Figur 5: den Verfahrweg des Linearantriebs zwischen den einzelnen Winkelpositionen;
- Figuren 6 - 10: die Bandsäge mit unterschiedlichen Neigungspositionen des Sägebandes von + 5° (Figur 6), - 2,5° (Figur 7), +/- 0° (Figur 8) - 2,5° (Figur 9) bis zu - 5° (Figur 10).

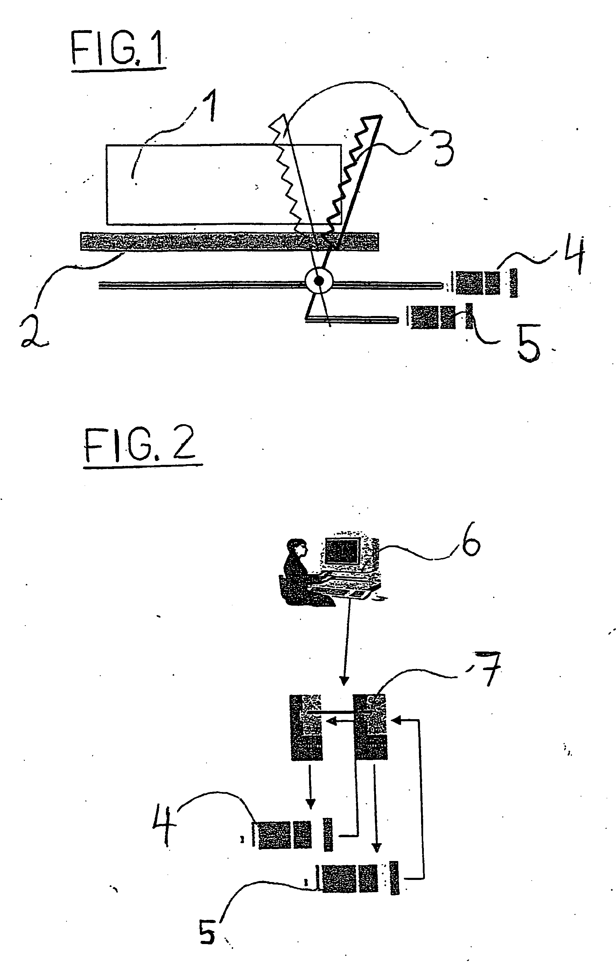

In Figur 1 ist der schematische Aufbau der erfindungsgemäßen Bandsäge dargestellt. Das zu sägende Werkstück 1 wird bei dem dargestellten Ausführungsbeispiel nicht bewegt. Es liegt auf einer Werkstückauflage 2, auf der es gegebenenfalls zusätzlich befestigt werden kann. Bei der dargestellten Bandsäge handelt es sich um eine Vertikalbandsäge, bei der die translatorischen Bewegungen und die Schwenkbewegungen als auch die Vorschubbewegung ausschließlich vom Sägeband 3 ausgeführt werden. Beim Sägeband 3 handelt es sich um ein umlaufendes Sägeband, das in einem Werkzeugträger (hier nicht dargestellt) geführt ist. Die translatorischen Bewegungen des Sägebandes relativ zum Werkstück und die Vorschubbewegung des Sägebandes auf das Werkstück werden mit einem Linearantrieb 4 vorgenommen. Der Linearantrieb kann beispielsweise als Kettenantrieb ausgeführt sein. Zur Erzeugung der Schwenkbewegungen des Sägebandes wird ein Schwenkantrieb 5 eingesetzt. Dieser kann beispielsweise als Elektrozylinder ausgeführt sein.

Zur Erzeugung der gewünschten Schnittkrümmung bzw. der gewünschten Eingriffslänge müssen die Bewegungsabläufe von Linearantrieb 4 und Schwenkantrieb 5 aufeinander abgestimmt (gekoppelt) werden.

In Figur 2 ist schematisch das Konzept der Steuerung der beiden Antriebssysteme 4 und 5 dargestellt. An einem PC 6 werden die entsprechenden Parameter, die für den Sägevorgang relevant sind, eingegeben. Diese Daten werden dann an den Frequenzumrichter 7 weitergegeben. Im Frequenzumrichter 7 wird dann mit den vom PC 6 übertragenen Daten die mathematische Funktion zur Steuerung der beiden Antriebe 4 und 5 berechnet. Vom Frequenzumrichter 7 werden dann entsprechende Signale an die Antriebssysteme 4 und 5 weitergegeben. Zur Abstimmung der beiden Antriebssysteme 4 und 5 aufeinander geben diese ihrerseits wieder Signale an den Frequenzumrichter 7. Der Frequenzumrichter 7 ist somit für die Koordination (die Achskopplungen) der beiden Antriebe 4 und 5 verantwortlich. Es findet eine kontinuierliche Regelung der Antriebssysteme statt.

Als Daten werden am PC die geometrischen Abmessungen des Werkstücks, die Schnittgeschwindigkeit, die Zustellgeschwindigkeit, die Schwenkgeschwindigkeit usw. eingegeben.

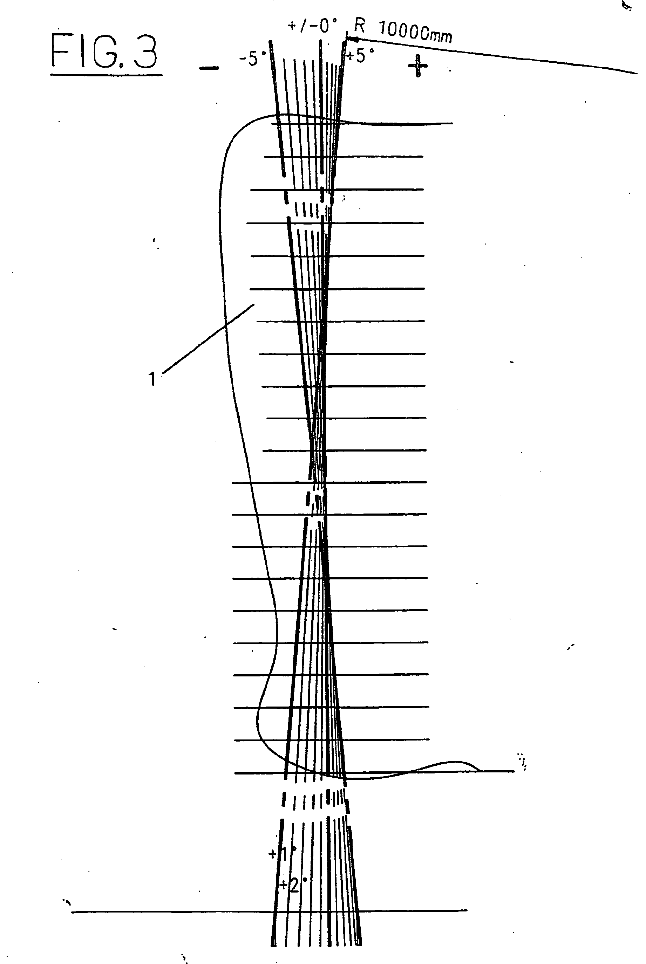

In Figur 3 sind die unterschiedlichen Sägebandpositionen in Eingradschritten von - 5° bis + 5° im Werkstück 1 dargestellt. Bei dem dargestellten Ausführungsbeispiel beträgt die Bandeingriffslänge ca. 300 mm. Der als gekrümmter Schnitt entstehende Kreisbogen hat einen Radius von z. B. ca. 10.000 mm. Auf dem unterhalb des Werkstücks dargestellten Zahlenstrahl sind die Positionen der Laufrollen des Linearantriebs zu jedem Winkel dargestellt. Der lineare Weg ist von der Schnitthöhe abhängig. Beispielsweise beträgt der maximale lineare Weg bei einem Schwenkwinkel von 10° und 2.000 mm Schnitthöhe = 248,47 mm.

An der Werkstückoberkante dringt das Sägeband bei einem Schwenkwinkel von + 5° am tiefsten in das Werkstück ein, mit abnehmendem Schwenkwinkel nimmt die Eindringtiefe des Sägebandes an der Werkstückoberkante kontinuierlich ab und erreicht bei einem Schwenkwinkel von - 5° ihr Minimum.

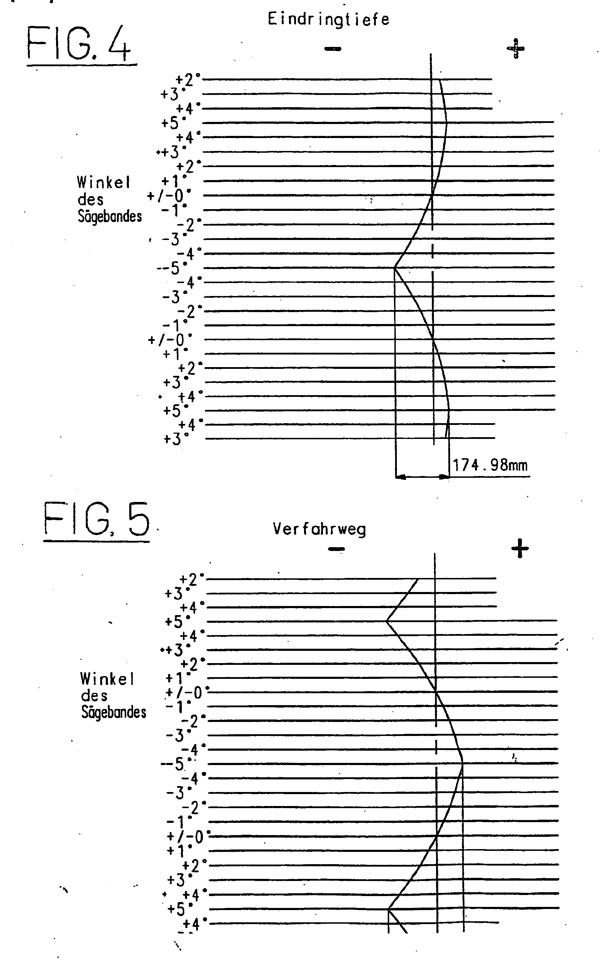

In Figur 4 ist diese Eindringtiefe des Werkszeuges in den zu sägenden Werkstoff an der Werkstückoberkante in Abhängigkeit der Winkelpositionen dargestellt. In dieser Auftragung erkennt man, dass bei einem Winkel von + 5° das Sägeband an der Werkstückoberkante am tiefsten in das Werkstück eindringt und mit abnehmendem Winkel die Eindringtiefe in das Werkstück zurückgeht. Bei einem Schwenkwinkel von 0° beträgt die Eindringtiefe in das Werkstück ebenfalls 0 mm. Mit weiter abnehmendem Schwenkwinkel entfernt sich dann das Sägeband an der Werkstückoberkante zunehmend aus dem Werkstück. Entsprechend Figur 4 erkennt man, dass die Eindringtiefe kontinuierlich abnimmt. Sie erreicht ihr Minimum bei einem Schwenkwinkel von - 5°. Mit weiter ansteigendem Schwenkwinkel nimmt dann die Eindringtiefe an der Werkstoffoberseite wieder kontinuierlich zu und erreicht wieder bei einem Schwenkwinkel von + 5° ihr Maximum. Innerhalb eines Zyklusses von - 5° bis + 5° wird von dem Sägeband an der Werkstückoberkante ein Weg von 174,88 mm bei einer Schnitthöhe von 2.000 mm und einem eingestellten Kreisbogenradius von 10.000 mm zurückgelegt.

In Figur 5 ist für die unterschiedlichen Winkelpositionen des Sägebandes der Verfahrweg des Sägebandes dargestellt. Das Sägeband hat bei einem Schwenkwinkel von + 5° den größten linearen Abstand zum Werkstück. Mit abnehmendem Schwenkwinkel des Sägebandes nimmt der lineare Abstand des Sägebandes vom Werkstück kontinuierlich ab. Bei einem Schwenkwinkel von 0° beträgt der lineare Verfahrweg des Sägebandes 0 mm. Mit weiter abnehmendem Schwenkwinkel nimmt der Verfahrweg des Sägebandes kontinuierlich zu und erreicht bei einem Schwenkwinkel von - 5° sein Maximum. Mit weiter zunehmenden Schwenkwinkel nimmt dann der Verfahrweg des Sägebandes wieder kontinuierlich ab und erreicht bei einem Schwenkwinkel von + 5° sein Minimum. Der während eines Zyklusses des Schwenkwinkels von - 5° bis + 5° zurückgelegte Verfahrweg beträgt im dargestellten Ausführungsbeispiel 248,47 mm bei einer Schnitthöhe von 2.000 mm und einem Kreisbogenradius von 10.000 mm.

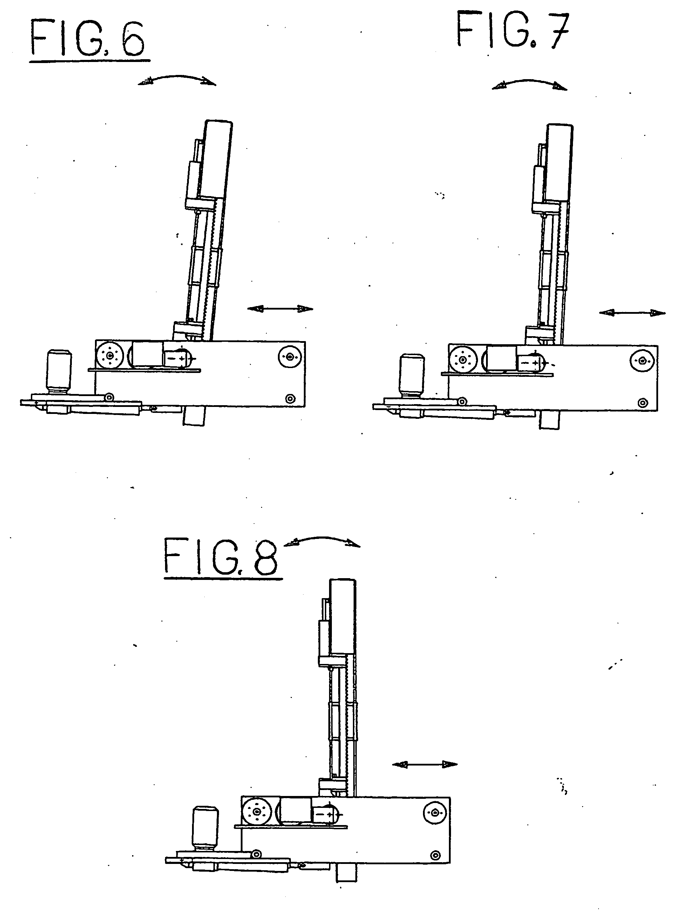

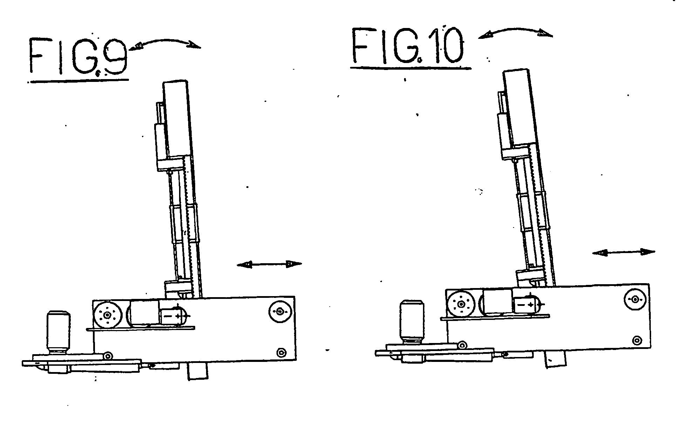

Im dargestellten Ausführungsbeispiel wird die Vorschubbewegung des Sägebandes diskontinuierlich vorgenommen. Sie findet nur in den beiden Umkehrpunkten des Schwenkwinkels, also bei - 5° und bei + 5° statt. Nach Vornahme der Vorschubbewegung setzt das Zusammenwirken von translatorischer Bewegung und Schwenkbewegung erneut ein, um den bogenförmigen Schnitt zu realisieren. Im dargestellten Beispiel wurde die translatorische Bewegung, die von dem Linearantrieb vorgenommen wird, auf die Schwenkbewegung, die vom Schwenkantrieb vorgenommen wird, abgestimmt. D.h., dass der Schwenkantrieb eine Bewegung entsprechend einer Sinusfunktion zwischen + 5° und - 5° ausführt, auf den die Bewegung des Linearantriebs dann abgestimmt wird, mit dem Ziel, den gewünschten Schnittverlauf im Werkstück zu erzeugen. In den Figuren 6 bis 10 wird in anschaulicher Weise die Position des Sägebandes in seinem Werkzeugträger zu unterschiedlichen Schwenkwinkeln dargestellt. Der Schwenkwinkel in Figur 6 beträgt + 5°, in Figur 7 beträgt er + 2,5°, in Figur 8 beträgt er ± 0°, in Figur 9 beträgt er - 2,5° und in Figur 10 beträgt er - 5°.

## Patentansprüche

1. Bandsäge insbesondere für Werkstücke (1) aus Stein und ähnlich schwer zerspanbaren Materialien mit einem Werkstücktisch (2), auf dem zumindest ein Werkstück (1) festlegbar ist, und einem Werkzeugträger für ein umlaufendes Sägeband (3), wobei Werkstück (1) und Sägeband (3) relativ zueinander translatorische Bewegungen und Schwenkbewegungen um eine zur Schnittebene senkrechte Achse ausführen, die so aufeinander abgestimmt sind, dass ein gekrümmter Schnittverlauf in dem Werkstück entsteht,
**dadurch gekennzeichnet,**
**dass** die Bandsäge eine Vertikalbandsäge ist und dass die geometrischen Parameter der Schnittkurve stufenlos variierbar sind.

2. Bandsäge nach Anspruch 1,
**dadurch gekennzeichnet,**
**dass** das Sägeband (3) zu einem feststehenden Werkstück (1) translatorische Bewegungen und Schwenkbewegungen um eine senkrechte Achse zur Schnittebene ausführt.

3. Bandsäge nach Anspruch 1,
**dadurch gekennzeichnet,**
**dass** das Werkstück (1) zu einem feststehenden umlaufenden Sägeband (3) translatorische Bewegungen und Schwenkbewegungen um eine senkrechte Achse zur Schnittebene ausführt.

## Claims

1. Band saw, in particular for workpieces (1) made from stone and other materials which are similarly difficult to machine, with a workpiece table (2) on which at least one workpiece (1) can be fixed and a tool support for a rotating saw band (3), wherein the workpiece (1) and the saw band (3) carry out translatory movements relative to one another and pivoting movements about an axis perpendicular to the cutting plane, the said movements being coordinated so that a curved cutting path is produced in the workpiece, **characterised in that** the band saw is a vertical band saw and that the geometrical parameters of the cutting curve are continuously variable.

2. Band saw as claimed in Claim 1, **characterised in that** the saw band (3) carries out translatory movements relative to a stationary workpiece (1) and pivoting movements about an axis perpendicular to the cutting plane.

3. Band saw as claimed in Claim 1, **characterised in that** the workpiece (1) carries out translatory movements relative to a fixed rotating saw band (3) and pivoting movements about an axis perpendicular to the cutting plane.

## Revendications

1. Scie à ruban notamment destinée à des pièces (1) en pierre et en des matériaux à usinabilité par enlèvement de copeaux semblablement difficile, comprenant un plateau (2) repose-pièces sur lequel au moins une pièce (1) peut être abloquée, et un porte-outil affecté à un ruban de sciage (3) en révolution, sachant que la pièce (1) et le ruban de sciage (3) accomplissent mutuellement, autour d'un axe perpendiculaire au plan de coupe, des mouvements translatoires et des mouvements pivotants qui sont réciproquement coordonnés de manière à provoquer, dans ladite pièce, un tracé de coupe curviligne,
**caractérisée par le fait**
**que** ladite scie à ruban est une scie à ruban vertical ; et par le fait que les paramètres géométriques du tracé de coupe peuvent être modifiés en continu.

2. Scie à ruban selon la revendication 1,
**caractérisée par le fait**
**que** le ruban de sciage (3) accomplit, vis-à-vis d'une pièce (1) immobile, des mouvements translatoires et des mouvements pivotants autour d'un axe perpendiculaire au plan de coupe.

3. Scie à ruban selon la revendication 1,
**caractérisée par le fait**
**que** la pièce (1) accomplit, vis-à-vis d'un ruban fixe de sciage (3) en révolution, des mouvements translatoires et des mouvements pivotants autour d'un axe perpendiculaire au plan de coupe.
